# EUROPEAN PATENT SPECIFICATION

(11) **EP 2 471 649 B1**
(45) Date of publication and mention of the grant of the patent: **10.07.2013**
(21) Application number: 10382368.8
(22) Date of filing: 31.12.2010
(51) Int. Cl.: B29C 70/34, B29C 70/38, B29C 70/54, B29C 31/08

(54) **Membrane manipulating and compacting device for the automated manufacture of composite preforms, and method for obtaining such preforms**
Membranmanipulations- und Komprimiervorrichtung zur automatischen Herstellung von Verbundstoffvorformen, und Verfahren zum Erhalten der Vorformen
Dispositif de compactage et de manipulation utilisant une membrane pour la fabrication automatique de préformes composites et procédé permettant d'obtenir de telles préformes

(43) Date of publication of application: 04.07.2012
(73) Proprietor: FUNDACION TECNALIA RESEARCH & INNOVATION, 20009 San Sebastián (Guipúzcoa) (ES)
(72) Inventor: Segura Moreno, Miguel, 20009 San Sebastian (ES); Mezzacasa Lasarte, Ricardo, 20009 San Sebastian (ES); Estensoro Astigarraga, Francisco, Jose, 20009 San Sebastian (ES); García Martinez, Jose, Ramon, 20009, SAN SEBASTIAN (ES); Irastorza Arregui, Xabier, 20009 San Sebastian (ES); Collado Jimenez, Valentin, 20009 San Sebastian (ES); Beloki Zubiri, Oihane, 20009 San Sebastian (ES)
(74) Representative: Carpintero Lopez, Francisco

(56) References cited:
- EP-A1- 0 577 505
- EP-A1- 2 266 785

## Description

### Technical field of the Invention

The present invention is encompassed in the technical field of equipment for the automated manufacture of fiber-reinforced composites, and it particularly relates to a manipulating and compacting mechanism and to a method used for manufacturing three-dimensional preforms of components, based on both dry fiber and on preimpregnated materials.

### Background of the Invention

Materials based on composites are being extensively used in different technical and commercial areas, such as the aerospace, transport, wind energy sectors, and generally in those applications with important requirements which combine a low weight and high mechanical strength. For the manufacture of components manufactured from composites a wide range of reinforcement fibers can be used, such as: carbon fiber, glass fiber, ceramic fiber, natural fibers, etc. The fibers can in turn be in very different formats, for example cut in the form of rovings wound on reels, woven fibers, etc. On the other hand, the fibers can be randomly ordered, or ordered in one direction or multiple directions in a component.

There are different ways of combining the polymeric resin with the dry fiber, for forming the end composite part. The simplest manufacturing processes are manual processes, in which the fiber, with the aid of a brush, is manually impregnated with resin catalyzed directly on the mold or support structure. However, the main drawback of processes of this type is that they cannot suitably control the amount of resin which impregnates the fiber, or its homogenous distribution. This means that the repeatability between the different parts of the series is very poor.

For the purpose of avoiding these problems, preimpregnated materials, which combine the fiber and the resin system ready to harden, have typically been used. The main drawback of these materials, in addition to their high cost, is that they must be kept cooled to avoid the early curing of the resin and that their lifetime is fairly short. These materials can be draped on the mold manually or by means of automated machinery. Once laminated on the mold, curing is performed, typically by means of applying heat and pressure in equipment referred to as an autoclave.

The high costs of the raw materials combined with the high investments in equipment (autoclaves, draping machines), entail very high production costs. Therefore, new methods of production are being developed which are based on liquid technologies, which are characterized by a first preforming phase, in which it is necessary to manufacture a dry fiber preform, which is later placed in a mold, in which the resin is later infiltrated by the action of the vacuum (infusion processes), of a positive pressure (Resin Transfer Molding processes or RTM processes) or by means of the combined action of both. These processes do not require such strict raw material storage conditions. Dry fibers do not require special storage conditions and since the resins are not pre-catalyzed, they have longer lifetimes than those of prepregs.

The most critical point of the liquid impregnation processes is precisely the preforming. Generally, the starting material for manufacturing a preform are fabric sheets (2D elements), whereas the mold has a 3D configuration corresponding to the composite part to be obtained. If the mold is simple, it is common to start from 2D patterns and manually draping them on the mold, which is later closed for impregnation. However, in the case of more complex molds, it is not possible to fix the dry sheets, so a prior preforming process is necessary. The process most widely used for the manufacture of structural components is the hot forming process. In the moment of placement, a material referred to as a binder is applied to each fabric (sprayed or with a brush) (the starting fabric is sometimes already coated with the amount of binder necessary for preforming). Once placed in the mold, pressure and temperature are applied on the sheet, such that the binder is activated and the fabric acquires the three-dimensional shape of the mold. This process can be done sheet by sheet, if the geometry is very complicated, or in a single step, after placing all the fabric sheets. The manner of applying the pressure can also vary. A vacuum bag is most typically used after laminating all the fabrics, but if the preforming is to be done sheet by sheet, plate-like elements are used in order to gradually adapt the fabric to the geometry of the mold.

Currently, these preforming processes are eminently manual, with the problems of high cost and lack of repeatability that this involves. If an automated manufacture is required, it is necessary to design a device for grasping the fabrics when flat, placing them on the mold and somehow achieving the activation of the binder while the pressure necessary for obtaining the compaction of the preform on the three-dimensional mold is applied.

For the purpose of carrying out in the most automated manner possible the processes for manipulating fiber fabrics and the positioning thereof, different 2D mechanisms have been developed which allow manipulating fiber fabrics in two dimensions, for example the SCHMALZ Coanda Gripper SCG and the Coanda gripper plane of the University of Norway (patent application WO 2009054732 A1). The limitation of these devices rests on the fact that the draping of the fabrics is also flat, is it is impossible to adapt them to the geometry of complex molds.

However, if the compaction phase (generating a permanent geometry in the preform, prior to the molding process with the resin) is to also be automated, it is necessary to be able to act in three dimensions (3D). Different devices which allow working in 3D, including different devices based on flexible membranes, are known for that purpose.

Patent application US 2009/008825 A1 describes a device the manipulating/compacting element of which has the shape of the cavity of the mold. It is made of an elastic material and it deforms when grasping the fabric arranged on a surface, adapting to the fabric. When the terminal is released from the flat surface, it recovers its initial shape, the fabric adopting the shape of the cavity of the mold. The physical principle for achieving adhesion of the fabric to the manipulator can be several (vacuum through multiple ducts, electrostatic force, adhesive, magnetic, etc.). It is a device suitable for both dry fabrics and for prepregs. This mechanism allows displacing and manipulating the fabrics, placing them in the mold. The compaction is performed by means of the pressure exerted by the machine (no described), on which this terminal is assembled, on the mold. The greatest limitation is based on the fact that it is suitable only for molds having relatively small dimensions and with non-complex geometries. Each mold/part further requires specific tools.

Patent application US 2010/0007065 A1 also describes a mechanism which allows holding and manipulating fiber-reinforced fabrics. In this case, the compaction of the fabrics on the mold using an elastic membrane, which adapts to the shape of the mold via the application of a vacuum, whereby compacting the preform. However, the fabrics are not manipulated by means of the mentioned membrane, but rather through many height adjustable suction elements (Bernoulli effect) which hold the fabric and carry it to the mold where it is positioned. It is controlled and automated with two different systems (manipulation system and compaction system with elastic membrane), whereby increasing the complexity of the mechanism and its control. This patent is very generic, focusing on the assembly of the mechanism for manufacturing preforms more than on the positioning and compacting system.

A flexible surface is also used in the device described in patent application WO 2008110615 A1, in this case said flexible surface being formed by multiple vacuum-blowing channels instead of a single membrane. Unspecified heat elements are used to activate the binder. The device described in this document is not oriented towards the manufacture of complete preforms, but it works like a stamp for the placement of patches in FPP, a technology which allows the manufacture of preforms by means of the successive placement of small patches in the desired positions and orientations for optimizing the performance of the end component.

The systems described in the patent applications JP 2007118598 (A) and JP 2008230020 (A) also use flexible membranes in this case for producing composite preforms by means of applying pressure with simple means. The system described in the second document has the particularity that it introduces additional elements the purpose of which is to maintain the thickness of the composite part constant in the edge areas without producing voids or lack of resin in the mentioned areas. However, these devices do not allow manipulating or positioning the fabrics with the same mechanism that compacts the preform, which has to be done by other means.

A double membrane system is used (one more rigid than the other) in the device described in patent EP1808282B1 for molding prepregs with pressure. It seeks to achieve positive pressure without an autoclave, thus overcoming the limitations caused by the autoclave. The prepreg can be heated in different ways for the purpose, if necessary, of curing the part. This system also allows the use of vacuum to aid in compacting the prepreg. However this device does not consider manipulating or positioning the fabrics, which has to be done by other means.

One development that is being made and which seeks to implement both manipulating and positioning the fiber fabrics, as well as also compacting them for obtaining composite preforms is a device referred to as a preforming end-effector, which is being developed by the University of Munich in the "CFK-Tex" research project. On one hand, this device allows holding carbon fabrics by means of an elastic membrane (heat resistant and permeable to air by means of holes in the membrane) on which different suction elements by means of vacuum are placed which exert the holding force as well as heat the fabrics by means of heating elements. On the other hand, it also allows compacting the fabrics in the mold by means of a combination of the pressure exerted by the elastic membrane and a roller movement (by means of robot), allowed by the geometry of the mechanism (end-effector). This system is limited by the fact that it is only valid for determined geometries. It further requires a relatively complex suction system.

Document EP 2 266 785 A1 discloses a device according to the preamble of claim 1 and a method according to the preamble of claim 15.

As can be seen, none of the systems of the prior art allows grasping fiber fabric sheets arranged in 2D, transferring them to a mold to give them a 3D geometry and compacting them to obtain a 3D preform by means of a single device, which is a drawback both concerning the cost of those systems and concerning the times for obtaining the preforms.

### Description of the Invention

The present invention thus relates to a membrane manipulating and compacting device for the automated manufacture of both dry fiber and preimpregnated material preforms. The preforms are later used in the manufacture of structural components.

The manipulating device includes the following advantages over the existing prior art:
- The manufacture of the preforms is done automatically, improving the quality thereof and reducing manufacturing cots.
- It is a flexible and reconfigurable system, adapting to different mold sizes and geometries.
- It is compatible with different heating systems and strategies for activating the binder.
- It is applicable both for dry fiber preforms and for preimpregnated material preforms.

The Manipulating and compacting device according to the present invention comprises a support structure coupleable to a moveable translation element by means of a fixing structure; a membrane assembled in the support structure; and at least one vacuum connector assembled in the support structure; and wherein
the support structure is a frame with a central opening;
the membrane is an elastically flexible membrane comprising a perimetric strip immobilized in the support structure surrounding a central area covering the central opening of the support structure, the membrane comprising a smooth upper layer impermeable to air with a substantially smooth lower surface and a lower layer permeable to air, for example, a lower layer provided with many holes;
spacing means for spacing the lower face of the upper layer from the upper face of the lower layer and allowing a distribution of a vacuum applied between said layers through the vacuum connector are located between the upper layer and the lower layer;
the upper layer and the lower layer are hermetically joined to one another in a joining area in the perimetric strip of the membrane, far from said central opening;
the vacuum connector opens into said area of the perimetric strip neighboring said central opening between said upper layer and said lower layer such that when the lower surface of the lower layer is in contact with a fiber fabric sheet and a vacuum is applied to the vacuum connector, air is suctioned through the spacing means and the lower layer, such that the fiber fabric sheet is retained in the lower layer by the action of the vacuum;
the upper layer and the lower layer of the membrane are elastically flexible such that they are capable of adapting to the geometry of three-dimensional molds, as they are capable of stretching with the application of the vacuum and/or pressure.

According to one embodiment of the invention, the support structure can comprise an upper part and a lower part which are coupled to one another by fixing means and which trap the perimetric strip of the elastic membrane between one another, and the vacuum connector traverses one of said parts of the support structure for opening between the upper and lower layers of the membrane. Likewise, the support structure can be hermetically coupleable to a molding area of a compaction work bench when it is overlain on the mold, such that when it is overlain on the mold, an air-tight space delimited between the membrane and said molding area is formed in the central opening of the support structure. In this case, the membrane is made of a sufficiently stretchable material for, when it is overlain on the mold surrounding it, and a vacuum is applied in said air-tight space, displacing towards the mold and pressing previously draped fiber fabric sheets towards the mold and compacting said fiber fabric sheets for forming a composite preform. Alternatively or complementarily, the support structure can also be provided with a hermetically assembled excess pressure hood coupled to the support structure such that it covers the upper portion of the central opening of the support structure. In this case, the membrane is made of a sufficiently stretchable material for, when it is overlain on the mold surrounding it and the inside of the hood is pressurized, displacing towards the mold and pressing previously draped fiber fabric sheets towards the mold and compacting said fiber fabric sheets for forming a preform.

The support structure can additionally be provided with binder application systems and/or heating systems (heated electric wires, infrared, hot air, etc.) which may be required for activating the binder and binding the fiber fabrics during the preform compacting process. When the support structure is provided with a heating system, the flexible membrane must have certain heat resistance which allows heating the preform through it. Different types of rubbers, such as the silicones for example, bring together all the features of elasticity, mechanical strength and heat resistance that are required.

In one embodiment of the device according to the invention, the lower layer comprises a substantially smooth lower surface and an upper surface facing the lower surface of the upper layer, and the spacing means comprise many spacing projections preferably emerging from the upper surface of at least the central area of the lower layer, though they can alternatively or complementarily also emerge from the lower surface of at least the central area of the upper layer. These spacing projections form an air passage through which the air suctioned through the lower layer towards the vacuum connector passes, thus allowing that when the vacuum is applied to the vacuum connector, the latter is distributed throughout the entire central area due to the gaps that the projections leave between one another. Preferably, the lower layer and/or the upper layer of the membrane are reinforced in its perimetric strips for avoiding breakages or damage due to the stress that these layers are exposed to during the use of the device.

Alternatively or complementarily, the spacing means can comprise in at least one area of the perimetric strip neighboring the central opening of the support structure, an intermediate vacuum distribution layer separating the upper and lower layers, which allows the distribution of the air suctioned through the lower layer towards the vacuum connector, in which case the vacuum connector opens into the vacuum distribution layer. The vacuum distribution layer can be further interposed between the respective central areas of the upper layer and of the lower layer, and can be integrated in the lower layer of the elastic membrane. The vacuum distribution layer can be made of a vacuum distributing material selected from polyester thread aeration fabrics, elastic cotton meshes, and the like. This vacuum distribution material serves to avoid the blockage of the air passage between the layers of the membrane in the areas in which there are no projections, and for assuring the uniform distribution of the vacuum between the upper layer and the lower layer.

The upper layer of the flexible membrane can be made of an elastic material selected from silicone, neoprene, butyl rubbers, nitrile rubbers and the like, and has a thickness that will be in accordance with the needs set forth by the mold, which must conjugate the need of stretching to adapt to the surface thereof and the strength of the membrane.

The lower layer can be made of a material similar to that of the upper layer of the membrane. The projections necessary for separating the lower face of the upper layer from the upper face of the lower layer can be bosses. The permeability to air of the lower layer of the flexible membrane can be achieved by means of air passage holes arranged between the spacing projections and for example between the aforementioned bosses. The lower layer provided with bosses can be manufactured, for example, from liquid silicone molded onto a mold with shapes forming the bosses. Once the lower layer is molded, a series of holes are made in the areas between bosses for the purpose of converting it into a layer porous to air.

As can be inferred from the foregoing, due to the permeability to air of the lower layer of the membrane which is achieved, for example, through the holes made therein, the manipulating and compacting device according to the present invention, can make a vacuum which allows gripping the fiber fabric sheets arranged in 2D and transporting them to the mold (for example, by means of a robot which manipulates the device of the invention). Once the fiber fabric sheet has been draped in the mold, the membrane can act like a traditional compacting membrane by negative pressure (vacuum) or positive pressure (pressurization) which compacts the fiber fabric sheets against the mold. The device according to the present invention thus allows performing the operations of both a gripping device (gripper) and of a compacting device. The device thus becomes a compacting gripper which allows manipulating, positioning and compacting multiple types of fiber fabric for the purpose of obtaining preforms in a more automated and simpler manner, which is furthermore very versatile for working with a wide variety of geometries of different sizes and shapes (scalable), because it can simply adapt to different and relatively complex 3D geometries, without needing to make structural modifications or adaptations in the device.

The method according to the invention for manipulating and compacting fiber fabric sheets for obtaining preforms intended for the manufacture of composites comprises grasping successive fiber fabric sheets arranged two-dimensionally in a first work station, successively transferring the fiber fabric sheets to a second work station and placing the fiber fabric sheets on a three-dimensional mold stacking them on others for obtaining a preform, and compacting the fiber fabric sheets in place, either one by one, by groups in successive steps, or in a single step, depending on the complexity of the mold; and wherein the previously described manipulating and compacting device is used, and comprises the steps of
grasping a first fiber fabric sheet from the first work station by positioning the device on the first fiber fabric sheet and applying a vacuum between the upper layer and the lower layer of the elastic membrane such that the first fiber fabric sheet is adhered by air suction to the central part of the lower surface of the lower layer of the elastic membrane;
transferring the device with the first fiber fabric sheet to the second work station, and moving the device down towards a molding area in which the mold is located;
placing the first fiber fabric sheet on the mold, cutting off the vacuum, fixing the sheet to the mold if appropriate, and moving the device up leaving the first fiber fabric sheet placed on the mold, and displacing the device to the first work station for grasping a second fiber fabric sheet;
grasping, transferring, and placing the second and each successive fiber fabric sheet similarly to the first fiber fabric sheet on the previously placed fiber fabric sheet until having placed the last fiber fabric sheet of the preform;
subjecting at least one of the glass fiber fabric sheets placed on the mold to a compacting step which comprises:
moving the support structure down on at least one of the fiber fabric sheets accumulated on the mold until the support structure contacts the molding area, and the lower part of the support structure (1) and the molding area (15.1) are in hermetic contact through a gasket (2) such that the cavity between the membrane (6) and the molding area (15.1) is sealed;
applying pneumatic pressure to the flexible membrane selected from negative pressure, positive pressure and combinations thereof, such that it deforms until adopting the shape of the mold, for exerting pressure on the fiber fabric sheets placed in the mold and thus compacting the preform; and
cutting off the pneumatic pressure and withdrawing the device.

As can be observed, according to the method according to the present invention, first a vacuum is applied through the connector such that the vacuum applied in the entire area between the layers of the membrane suctions the outer (lower) air through the lower layer and, in case, through the vacuum distribution layer, for example through the holes arranged in the areas between the bosses of the lower layer, such that the device works like a gripper suctioning the fiber fabric sheet underneath, the latter being able to be manipulated and transported to the side of the preforming mold. After taking each fiber fabric sheet to the preforming mold, it is draped on the mold reducing the vacuum level until the fabric is released from the gripper. The preform is then compacted by means of applying a vacuum through the mold or the connector, or in the event that the pressure hood is provided in the support structure, the preform is alternatively or complementarily compacted by means of the pressurization inside the hood. The vacuum applied in the area between the mold and the flexible membrane makes the fiber fabric sheets adopt the shape of the preforming mold. This vacuum can also be used for assuring the placement of the fabrics on the mold while the positioning of the different layers forming the preform lasts. While the compaction is performed, the binder of the fabric layers forming the preform can be activated at the same time by means of the heating system integrated in the device.

As can be inferred from the previous description, the present invention allows simply automating the traditional preforming process, thus achieving a reduction of the process time and lessening of the costs thereof.

### Brief Description of the Drawings

Aspects and embodiments of the invention are described below based on schematic drawings in which
Figure 1 is a view of a work station which includes an embodiment of the manipulating device according to the present invention;
Figures 2a and 2b are partial sectional views of the manipulating device which schematically illustrate the grasping of a composite fabric from a manipulating bench;
Figure 3 is an upper partial perspective view of an embodiment of the layer with bosses forming part of the membrane of the manipulating device;
Figure 4a is an side front upper perspective view of the manipulating device shown in Figure 1, arranged in the mold without a membrane, in the compacting position;
Figure 4b is similar to Figure 1, but with the manipulating device provided with the membrane;
Figure 5 is a view of the support structure with the membrane in the compacting position;
Figure 6 is a longitudinal section view of the manipulating device arranged in the compacting position on the mold in the compaction work bench.

Reference numbers identifying the following elements are shown in these figures:
- 1: Support structure
- 1.1: Support structure - upper part
- 1.2: Support structure - lower part
- 1.3: Central opening in the upper part of the support structure
- 1.4: Central opening in the lower part of the support structure
- 2: Gasket of the structure
- 3: Mold
- 4: Multilayer elastic membrane
- 4.1: Gap between layers
- 4.2: Perimetric strip of the membrane
- 5: Smooth layer of the membrane
- 6: Layer with projections of the membrane
- 7: Projection
- 8: Hole between bosses
- 9: Vacuum connector
- 10: Fixing between parts of the structure
- 11: Fixing of the structure to the work bench
- 12: Fixing structure for fixing to a moveable translation element
- 12.1: Fixing plate
- 12.2: Legs
- 13: Fiber fabric
- 14: Fabric manipulation work bench
- 15: Compaction work bench (mold)
- 15.1: Molding area
- 16: Pressure hood
- 16.1: Pressurization connector
- 17: Vacuum connector in compaction mold

### Embodiments of the Invention

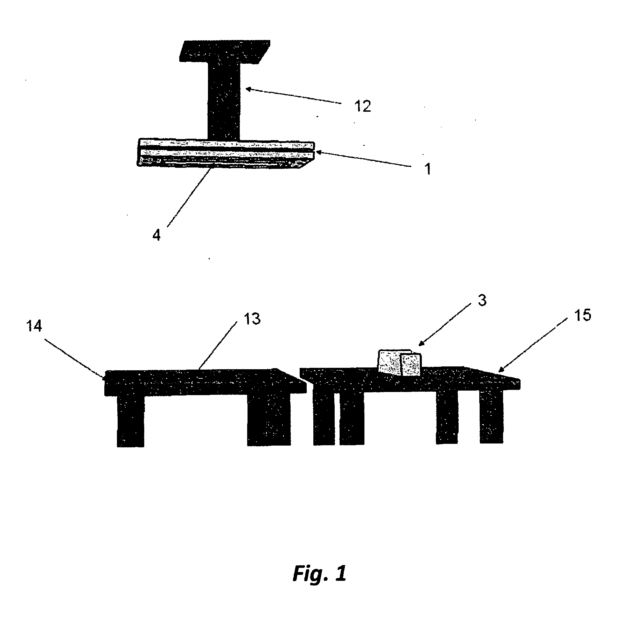

In the embodiment shown in Figure 1, the manipulating device according to the present invention comprises a support structure -1- including a multilayer elastic membrane -4-, and a fixing structure -12- coupleable to a conventional moveable translation element (not shown in the drawings). The manipulating device is used for grasping one or more fiber fabric sheets -13- from a work bench, and transferring it to a compaction work bench -15- in which a mold -3- is located, and for compacting the fiber fabric sheet or sheets arranged on the mold -3-.

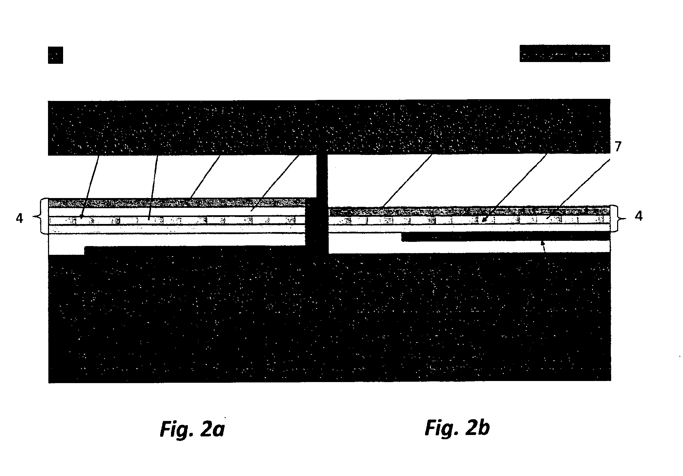

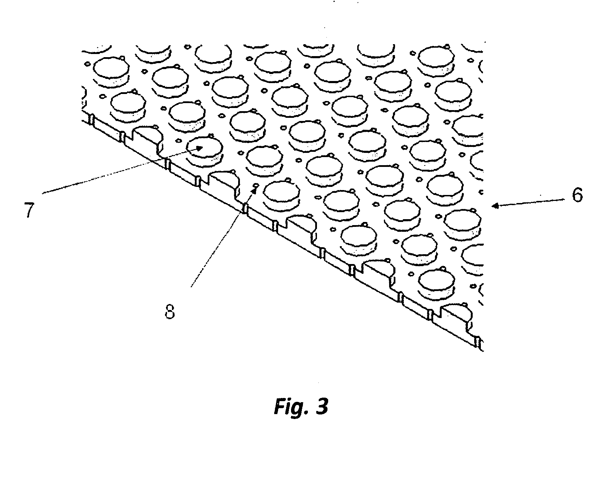

As can be seen in Figures 2a and 2b, the multilayer membrane -4- comprises a smooth upper layer -5- and a lower layer with projections -6-. The mentioned projections -7-, shown in the embodiment shown in the drawings as bosses, though they could also be grooved in other embodiments, face the lower face of the smooth layer -6-. As shown in Figure 3, the layer with projections -6- comprises many projections -7- emerging from its upper face, as well as many through holes -8-distributed among the projections -7-.

The smooth layer -5- and the layer with projections -6- are arranged in the frame such that when a vacuum is applied to the gap -4.1-, and therefore through the holes -8- of the layer with projections -6- , a suction force is applied for grasping the fiber fabric -13- from the manipulation work bench -14- and keeping it placed against the lower face of the layer of projections -6- for being able to transfer it, the free ends of the projections -7- are placed against the lower face of the smooth layer -5-.

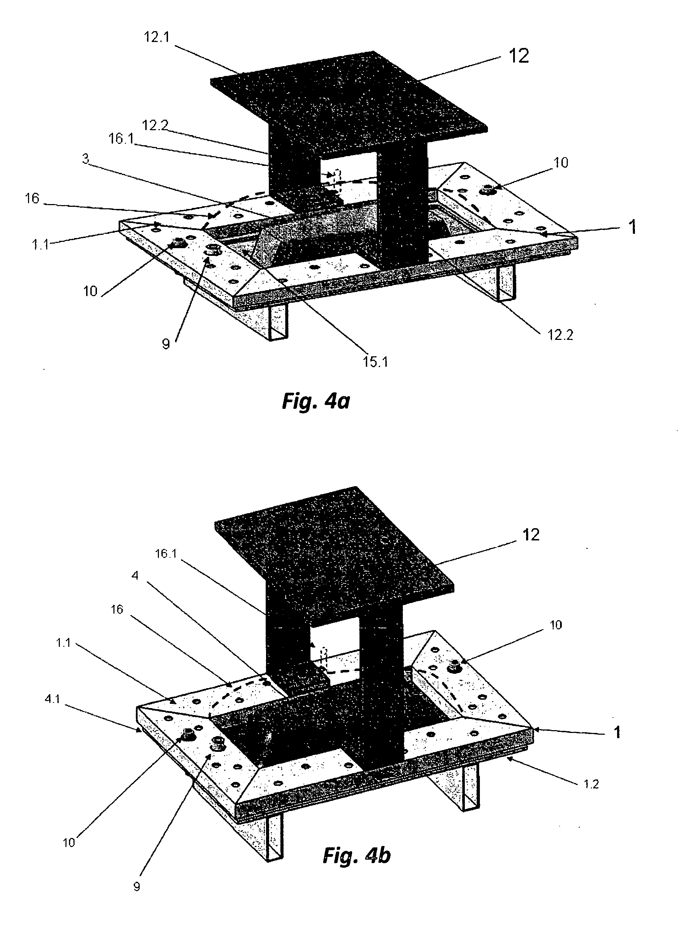

As shown in Figures 4a and 4b, the fixing structure comprises a fixing plate -12.1- joined to the support structure -1- by means of respective side legs -12.2-. The support structure -1- has, in upper plan view, a frame shape and comprises an upper part -1.1- and a lower part -1.2- including the elastic membrane -4- and trapping the perimetric strips -4.2- thereof, such that the membrane -4- is fixedly retained in the support structure -1-.

As can be seen in Figure 4a, showing the manipulating device without the elastic membrane in its compacting position in the molding area -15,1- of the compaction work bench -15-, the support structure -1- is arranged around the molding area -15.1- of the compaction work bench -15- in which the mold -3- is located. As illustrated in Figure 4b, in this compacting position, the lower face of the elastic membrane -4- presses the fiber fabric sheets -13- which have been draped on the mold -3- in the upper part of the mold -3- such that, since the support structure -1- has moved down, the membrane stretches and exerts pressure on the parts of the fiber fabric sheets -13- which are located in the upper face of the mold -3-. Then, when a vacuum is applied through the vacuum connector in the mold (17), the membrane 4 is displaced towards the mold -3- such that the fiber fabric sheets previously draped on the mold are pressed against the contour of the mold -3- and are compacted by the action of the membrane -4-. Alternatively or complementarily, a pressure hood -16-hermetically coupled to the upper part -1.1- of the support structure and covering the upper portion of the opening -1.3, 1.4- and, therefore, the membrane -4- overlain on the mold -3-, can be provided in the device shown in Figures 4b. When, by means of a pneumatic system (not shown in the drawings), the inside of the hood is pressurized through a pressurization connector -16.1-, the membrane -4- is forced to displace towards the mold -3- , such that the fiber fabric sheets previously draped on the mold are pressed against the contour of the mold -3- and are compacted by the action of the membrane -4-. In any of the two cases the membrane -4- adopts the configuration shown in Figure 4b.

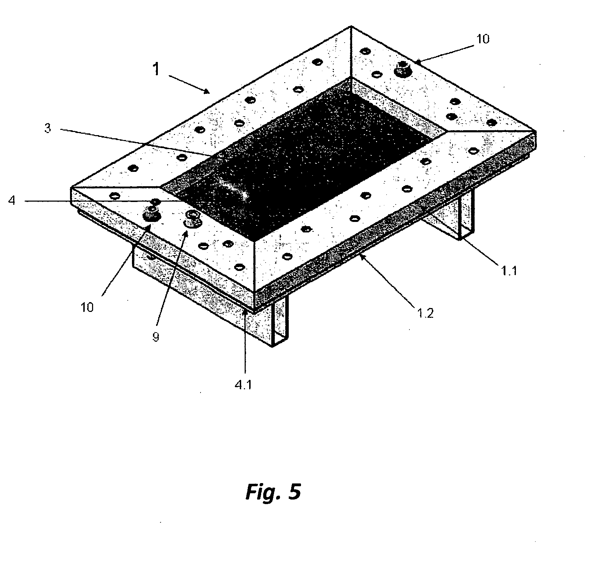

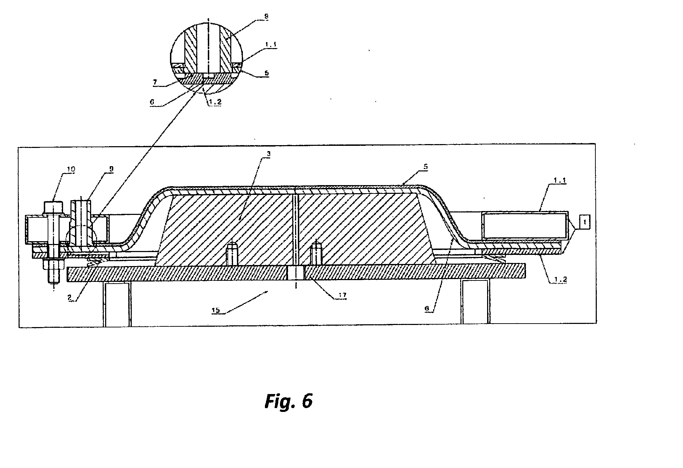

As can be seen in Figures 5 and 6, the upper part -1.1- and the lower part -1.3-have respective central openings -1.3, 1.4- and trap the perimetric strips -4.2- of the elastic membrane -4- made up of the smooth layer -5- and the layer with projections - 6- between one another. The parts -1.1, 1.2- of the support structure -1- are coupled to one another by means of respective fixings -10- provided in the profiles of the frame in the form of screws traversing the parts -1.1, 1.2- and threading in respective nuts. A vacuum connector -9- is provided in one of the profiles of the upper part -1.1- of the support structure -1-. As can be seen in Figure 6, in the compacting position, the support structure -1- is immobilized in the compaction work bench -15- by means of respective fixings -11- in the form of screws traversing respective perforations in the work bench -15-, in the lower part -1.1- and in the upper part -1.2- in the profiles of the support structure -1-. This configuration is optional, not being necessary in the even that the robot manipulator is capable of exerting the force necessary for assuring the air-tightness between the lower face of the membrane and the molding area. A gasket -2- which, in the compacting position of the manipulating device shown in Figure 6, is pressed against the upper face of the compaction work bench -15-, is provided in the lower face of the lower part -1.2- of the support structure -1- such that an air-tight chamber is formed in the central openings -1.3, 1.4- of the upper part -1.1- and lower part -1.2-, delimited in the upper portion by the smooth layer -5- of the membrane -4-and in the lower portion by the upper face of the compaction work bench -15-.

## Claims

1. Membrane manipulating and compacting device for obtaining preforms made up of fiber fabric sheets useful in the automated manufacture of composites, comprising a support structure (1) coupleable to a moveable translation element by means of a fixing structure (12): a membrane (4) assembled in the support structure (1); and at least one vacuum connector (9) assembled in the support structure (1);
wherein
the support structure (1) is a frame with a central opening (1.3, 1.4):
the membrane (4) is an elastically flexible membrane comprising a perimetric strip (4.2) immobilized in the support structure (1) surrounding a central area covering the central opening (1.3, 1.4) of the support structure (1), charcterized in that the membrane (4) comprises a smooth upper layer (5) impermeable to air with a substantially smooth lower surface and a lower layer (6) permeable to air;
spacing means (7, 4.3) for spacing the lower face of the upper layer (5) from the upper face of the lower layer (6) and allowing a distribution of a vacuum applied between said layers (5, 6) through the vacuum connector (9) are located between the upper layer (5) and the lower layer (6);
the upper layer (5) and the lower layer (6) are hermetically joined to one another in a joining area in the perimetric strip (4.2) of the membrane (4), far from said central opening (1.3, 1.4);
the vacuum connector (9) opens into said area of the perimetric strip (4.2) neighboring said central opening (1.3, 1.4) between said upper layer (5) and said lower layer (6) such that when the lower surface of the lower layer (5) is in contact with a fiber fabric sheet (13) and a vacuum is applied to the vacuum connector (9), air is suctioned through the spacing means (7, 4.3) and the lower layer (6), such that the fiber fabric sheet (13) is retained in the lower layer (6) by the action of the vacuum;
the upper layer (5) and the lower layer (6) of the membrane (4) are elastically flexible such that they are capable of adapting to the geometry of at least one three-dimensional mold (3) as they are capable of stretching with the application of the vacuum and/or pressure.

2. Membrane manipulating and compacting device according to claim 1, **characterized in that** the lower layer (6) is provided with many air passage holes (8).

3. Membrane manipulating and compacting device according to claim 1 or 2, **characterized in that**
the lower layer (6) comprises a substantially smooth lower surface and an upper surface facing the lower surface of the upper layer (5);
the spacing means (7, 4.3) comprise many spacing projections (7) emerging from the upper surface of the central area of the lower layer (6) and/or from the lower surface of the central area of the upper layer (5);
the spacing projections (7) form an air passage through which the air suctioned through the lower layer (6) towards the vacuum connector (9) passes.

4. Membrane manipulating and compacting device according to claim 3, **characterized in that** the projections (7) contact, at least when a vacuum is applied to the vacuum connector (9), the lower surface in the central part of the upper layer (5) and air passage are formed between the spacing projections (7).

5. Membrane manipulating and compacting device according to claim 4, **characterized in that** the central part of the upper layer (5) and the central part of the lower layer (6) are spaced from one another by a gap (4.1) such that when a vacuum is applied to the vacuum connector (9), the central part of the lower layer (6) is attracted towards the upper layer (5) such that the projections (7) contact the lower surface of the upper layer (5).

6. Membrane manipulating and compacting device according to one of claims 3 to 6, **characterized in that** the spacing projections (7) emerging from the lower layer (6) are bosses.

7. Membrane manipulating and compacting device according to one of claims 3 to 7, **characterized in that** the lower layer comprises air passage holes (8) arranged between the spacing projections (7).

8. Membrane manipulating and compacting device according to one of claims 3 to 7, **characterized in that** the spacing means (7) comprise, in at least one area of the perimetric strip (4.2) neighboring the central opening (1.3, 1.4) of the support structure (1), an intermediate vacuum distribution layer separating the upper layer (5) and lower layer (6) and allowing the distribution of the air suctioned through the lower layer towards the vacuum connector (9), and **in that** the vacuum connector (9) opens into the vacuum distribution layer.

9. Membrane manipulating and compacting device according to claim 8, **characterized in that** the vacuum distribution layer is further interposed between the respective central areas of the upper layer (5) and of the lower layer (6).

10. Membrane manipulating and compacting device according to claim 8 or 9, **characterized in that** the vacuum distribution layer is integrated in the lower layer (6).

11. Membrane manipulating and compacting device according to one of claims 8 to 10, **characterized in that** the vacuum distribution layer is made of a vacuum distributing material selected from polyester thread aeration fabrics, elastic cotton meshes, and the like.

12. Membrane manipulating and compacting device according to one of claims 1 to 11, **characterized in that**
the support structure (1) comprises an upper part (1.1) and a lower part (1.2) which are coupled to one another by fixing means (10) and which trap the perimetric strip (4.2) of the elastic membrane (4) between one another;
the supporting connector (9) traverses one of said parts (1.1, 1.2) of the vacuum structure (1) for opening between the upper layer (5) and lower layer (6) of the membrane (4).

13. Membrane manipulating and compacting device according to one of the preceding claims, **characterized in that** the support structure (1) is hermetically coupleable to a molding area (15.1) of a compaction work bench (15) when it is overlain on the mold (3), such that when it is overlain on the mold (3), an air-tight space delimited between the membrane (4) and said molding area (15.1) is formed in the central opening (1.3, 1.4) of the support structure (1), and **in that** the membrane (4) is made of a sufficiently stretchable material for, when it is overlain on the mold (3) surrounding it, and a vacuum is applied in said air-tight space, displacing towards the mold (3) and pressing previously draped fiber fabric sheets (13) towards the mold (3) and compacting said fiber fabric sheets (13) for forming a preform.

14. Membrane manipulating and compacting device according to one of the preceding claims, **characterized in that** it comprises a hermetically assembled excess pressure hood (16) coupled to the support structure such that it covers the upper portion of the central opening (1.3, 1.4) of the support structure (1), and **in that** the membrane (4) is made of a sufficiently stretchable material for, when it is overlain on the mold (3) surrounding it and the inside of the hood (16) is pressurized, displacing towards the mold (3) and pressing previously draped fiber fabric sheets (13) towards the mold (3) and compacting said fiber fabric sheets (13) for forming a preform.

15. Method for manipulating and compacting fiber fabric sheets for forming preforms intended for the manufacture of composites which comprises grasping successive fiber fabric sheets (13) arranged two-dimensionally in a first work station (14); successively transferring the fiber fabric sheets (13) to a second work station (15) and placing the fiber fabric sheets (13) on a three-dimensional mold (3), stacking them on others for obtaining a preform, and compacting the fiber fabric sheets (13) in place in at least one step; **characterized in that** the Membrane manipulating and compacting device defined in any one of claims 1 to 14 is used, and **in that** it comprises:
grasping a first fiber fabric sheet (13) from the first work station (14) by positioning the device on the first fiber fabric sheet (13) and applying a vacuum between the upper layer (5) and the lower layer (6) of the elastic membrane (4) such that the first fiber fabric sheet (13) is adhered, by air suction, to the central part of the lower surface of the lower layer (6) of the elastic membrane (4);
transferring the device with the first fiber fabric sheet (13) to the second work station (15), and moving the device down towards a molding area (15.1) in which the mold (3) is located;
placing the first fiber fabric sheet (13) on the mold (3), cutting off the vacuum, fixing the first fiber fabric sheet (13) if appropriate, moving the device up leaving the first fiber fabric sheet (13) placed on the mold (3), and displacing the device to the first work station (14) for grasping a second fiber fabric sheet (13);
grasping, transferring, and placing the second and each successive fiber fabric sheet (13) similarly to the first fiber fabric sheet on the previously placed fiber fabric sheet until having placed the last fiber fabric sheet of the preform;
subjecting at least one of the glass fiber fabric sheets (13) placed on the mold (3) to a compacting step which comprises:
moving the support structure (1) down on at least one of the fiber fabric sheets (13) accumulated on the mold (13) until the support structure (1) contacts the molding area (15.1) and the lower part of the support structure (1) and the molding area (15.1) are in hermetic contact through a gasket (2) such that the cavity between the membrane (6) and the molding area (15.1) is sealed;
applying pneumatic pressure to the flexible membrane (4) selected from negative pressure, positive pressure and combinations thereof, such that it deforms until adopting the shape of the mold (3) for exerting pressure on the fiber fabric sheets (13) placed in the mold and thus compacting the preform; and
cutting off the pneumatic pressure and withdrawing the device.

## Patentansprüche

1. Membranmanipulations- und Verdichtungsvorrichtung zum Erhalten von Rohlingen, die aus Fasergewebelagen hergestellt sind, die beim automatisierten Herstellen von Verbundwerkstoffen nützlich ist, umfassend eine Stützstruktur (1), die mittels einer Befestigungsstruktur (12) an ein bewegliches Translationselement koppelbar ist, eine in der Stützstruktur (1) montierte Membran (4) und zumindest einen Vakuumverbinder (9), der in der Stützstruktur (1) montiert ist,
wobei die Stützstruktur (1) ein Rahmen mit einer zentralen Öffnung (1.3, 1.4) ist; wobei die Membran (4) eine elastisch flexible Membran ist, die einen Umfangsstreifen (4.2) umfasst, der in der Stützstruktur (1) fixiert ist und einen zentralen Bereich, der die zentrale Öffnung (1.3, 1.4) der Stützstruktur (1) bedeckt, umgibt, **dadurch gekennzeichnet, dass** die Membran (4) eine glatte, luftundurchlässige obere Schicht (5) mit einer im Wesentlichen glatten unteren Fläche und eine luftdurchlässige untere Schicht (6) umfasst;
Abstandshalter (7, 4.3) zum Anordnen der unteren Fläche der oberen Schicht (5) in einem Abstand von der oberen Fläche der unteren Schicht (6) und zum Erlauben einer Verteilung eines Vakuums, das zwischen den Schichten (5, 6) durch den Vakuumverbinder (9) angelegt wird, zwischen der oberen Schicht (5) und der unteren Schicht (6) positioniert sind;
die obere Schicht (5) und die untere Schicht (6) miteinander hermetisch in einem Verbindungsbereich in dem Umfangsstreifen (4.2) der Membran (4) entfernt von der zentralen Öffnung (1.3, 1.4) verbunden sind;
sich der Vakuumverbinder (9) in den Bereich des Umfangsstreifens (4.2) benachbart zu der zentralen Öffnung (1.3, 1.4) zwischen der oberen Schicht (5) und der unteren Schicht (6) öffnet, so dass Luft durch die Abstandshalter (7, 4.3) und die untere Schicht (6) gesaugt wird, wenn die untere Fläche der unteren Schicht (5) in Kontakt mit einer Fasergewebelage (13) ist und ein Vakuum an dem Vakuumverbinder (9) angelegt wird, so dass die Fasergewebelage (13) in der unteren Schicht (6) durch die Wirkung des Vakuums zurückgehalten wird;
die obere Schicht (5) und die untere Schicht (6) der Membran (4) elastisch flexibel sind, so dass sie dazu in der Lage sind, sich der Geometrie zumindest einer dreidimensionalen Form (3) anzupassen, weil sie dazu in der Lage sind, sich beim Anlegen des Vakuums und/oder eines Drucks zu dehnen.

2. Membranmanipulations- und Verdichtungsvorrichtung gemäß Anspruch 1, **dadurch gekennzeichnet, dass** die untere Schicht (6) mit vielen Luftdurchgangslöchern (8) versehen ist.

3. Membranmanipulations- und Verdichtungsvorrichtung gemäß Anspruch 1 oder 2,
**dadurch gekennzeichnet, dass** die untere Schicht (6) eine im Wesentlichen glatte untere Fläche und eine der unteren Fläche der oberen Schicht (5) zugewandte obere Fläche umfasst;
die Abstandshalter (7, 4.3) viele Abstandsvorsprünge (7), die von der oberen Fläche des zentralen Bereichs der unteren Schicht (6) und/oder von der unteren Fläche des zentralen Bereichs der oberen Schicht (5) hervortreten, umfassen;
die Abstandsvorsprünge (7) einen Luftdurchgang bilden, durch welchen die durch die untere Schicht (6) in Richtung des Vakuumverbinders (9) gesaugte Luft verläuft.

4. Membranmanipulations- und Verdichtungsvorrichtung gemäß Anspruch 3, **dadurch gekennzeichnet, dass** die Vorsprünge (7) die untere Fläche in dem zentralen Teil der oberen Schicht (5) zumindest dann berühren, wenn ein Vakuum an dem Vakuumverbinder (9) angelegt wird, und Luftdurchgänge zwischen den Abstandsvorsprüngen (7) gebildet sind.

5. Membranmanipulations- und Verdichtungsvorrichtung gemäß Anspruch 4, **dadurch gekennzeichnet, dass** der zentrale Teil der oberen Schicht (5) und der zentrale Teil der unteren Schicht (6) voneinander durch eine Lücke (4.1) beabstandet sind, so dass der zentrale Teil der unteren Schicht (6), wenn ein Vakuum an dem Vakuumverbinder (9) angelegt wird, in Richtung der oberen Schicht (5) gezogen wird, so dass die Vorsprünge (7) die untere Fläche der oberen Schicht (5) berühren.

6. Membranmanipulations- und Verdichtungsvorrichtung gemäß einem der Ansprüche 3 bis 6, **dadurch gekennzeichnet, dass** die Abstandsvorsprünge (7), die von der unteren Schicht (6) hervortreten, Wülste sind.

7. Membranmanipulations- und Verdichtungsvorrichtung gemäß einem der Ansprüche 3 bis 7, **dadurch gekennzeichnet, dass** die untere Schicht Luftdurchgangslöcher (8) umfasst, die zwischen den Abstandsvorsprüngen (7) angeordnet sind.

8. Membranmanipulations- und Verdichtungsvorrichtung gemäß einem der Ansprüche 3 bis 7, **dadurch gekennzeichnet, dass** die Abstandshalter (7) in zumindest einem Bereich des Umfangsstreifens (4.2) benachbart zu der zentralen Öffnung (1.3, 1.4) der Stützstruktur (1) eine zwischenliegende Vakuumverteilungsschicht umfassen, welche die obere Schicht (5) und die untere Schicht (6) trennt und die Verteilung der durch die untere Schicht in Richtung des Vakuumverbinders (9) gesaugte Luft erlaubt, und dadurch, dass der Vakuumverbinder (9) sich in die Vakuumverteilungsschicht öffnet.

9. Membranmanipulations- und Verdichtungsvorrichtung gemäß Anspruch 8, **dadurch gekennzeichnet, dass** die Vakuumverteilungsschicht ferner zwischen den jeweiligen zentralen Bereichen der oberen Schicht (5) und der unteren Schicht (6) angeordnet ist.

10. Membranmanipulations- und Verdichtungsvorrichtung gemäß Anspruch 8 oder 9,
**dadurch gekennzeichnet, dass** die Vakuumverteilungsschicht in die untere Schicht (6) integriert ist.

11. Membranmanipulations- und Verdichtungsvorrichtung gemäß einem der Ansprüche 8 bis 10, **dadurch gekennzeichnet, dass** die Vakuumverteilungsschicht aus einem vakuumverteilenden Material hergestellt ist, das aus Polyesterfadenbelüftungsgeweben, elastischen Baumwollgittergeweben und Ähnlichem ausgewählt ist.

12. Membranmanipulations- und Verdichtungsvorrichtung gemäß einem der Ansprüche 1 bis 11, **dadurch gekennzeichnet, dass** die Stützstruktur (1) einen oberen Teil (1.1) und einen unteren Teil (1.2) umfasst, die miteinander durch Befestigungsmittel (10) gekoppelt sind, und die den Umfangsstreifen (4.2) der elastischen Membran (4) zwischen sich einklemmen;
der Stützverbinder (9) einen der Teile (1.1, 1.2) der Vakuumstruktur (1) für ein Öffnen zwischen der oberen Schicht (5) und der unteren Schicht (6) der Membran (4) kreuzt.

13. Membranmanipulations- und Verdichtungsvorrichtung gemäß einem der vorhergehenden Ansprüche, **dadurch gekennzeichnet, dass** die Stützstruktur (1) hermetisch mit einem Formbereich (15.1) einer Verdichtungswerkbank (15) koppelbar ist, wenn sie über die Form (3) gezogen ist, so dass ein luftdichter Raum, der zwischen der Membran (4) und dem Formbereich (15.1) begrenzt ist, in der zentralen Öffnung (1.3, 1.4) der Stützstruktur (1) gebildet ist, wenn sie über die Form (3) gezogen ist, und dadurch, dass die Membran (4) aus einem hinreichend dehnbaren Material hergestellt ist, um sie, wenn sie über die Form (3), sie umgebend, gezogen ist, und ein Vakuum an den luftdichten Raum angelegt ist, in Richtung der Form (3) zu versetzen und zuvor drapierte Fasergewebelagen (13) in Richtung der Form (3) zu drücken und die Fasergewebelagen (13) zum Bilden eines Rohlings zu verdichten.

14. Membranmanipulations- und Verdichtungsvorrichtung gemäß einem der vorhergehenden Ansprüche, **dadurch gekennzeichnet, dass** sie eine hermetisch zusammengefügte Überdruckhaube (16) umfasst, die mit der Stützstruktur gekoppelt ist, so dass sie den oberen Abschnitt der zentralen Öffnung (1.3, 1.4) der Stützstruktur (1) bedeckt, und dadurch, dass die Membran (4) aus einem hinreichend dehnbaren Material hergestellt ist, um sie, wenn sie über die Form (3), sie umgebend, gezogen ist, und das Innere der Haube (16) mit Druck beaufschlagt wird, in Richtung der Form (3) zu versetzen und zuvor drapierte Fasergewebelagen (13) in Richtung der Form (3) zu drücken und die Fasergewebelagen (13) zum Bilden eines Rohlings zu verdichten.

15. Verfahren zum Manipulieren und Verdichten von Fasergewebelagen zum Bilden von Rohlingen, die zum Herstellen von Verbundwerkstoffen vorgesehen sind, wobei das Verfahren Folgendes umfasst: Ergreifen von aufeinanderfolgenden Fasergewebelagen (13), die bei einer ersten Arbeitsstation (14) zweidimensional angeordnet sind; anschließendes Transferieren der Fasergewebelagen (13) zu einer zweiten Arbeitsstation (15) und Platzieren der Fasergewebelagen (13) auf einer dreidimensionalen Form (3), Stapeln dieser auf anderen zum Erhalten eines Rohlings und festes Verdichten der Fasergewebelagen (13) in zumindest einem Schritt; **dadurch gekennzeichnet, dass** die Membranmanipulations- und Verdichtungsvorrichtung, die in einem der Ansprüche 1 bis 14 definiert ist, verwendet wird, und dadurch, dass es Folgendes umfasst:
Ergreifen einer ersten Fasergewebelage (13) von der ersten Arbeitsstation (14) durch ein Positionieren der Vorrichtung auf der ersten Fasergewebelage (13) und ein Anlegen eines Vakuums zwischen die obere Schicht (5) und die untere Schicht (6) der elastischen Membran (4), so dass die erste Fasergewebelage (13) durch Luftansaugung an dem zentralen Teil der unteren Fläche der unteren Schicht (6) der elastischen Membran (4) haftet,
Transferieren der Vorrichtung mit der ersten Fasergewebelage (13) zu der zweiten Arbeitsstation (15) und Bewegen der Vorrichtung nach unten in Richtung eines Formbereichs (15.1), in welchem sich die Form (3) befindet;
Platzieren der ersten Fasergewebelage (13) auf der Form (3), Ausschalten des Vakuums, Befestigen der ersten Fasergewebelage (13), falls notwendig, Bewegen der Vorrichtung nach oben, wobei die erste Fasergewebelage (13) auf der Form (3) platziert bleibt, und Verschieben der Vorrichtung zu der ersten Arbeitsstation (14) zum Ergreifen einer zweiten Fasergewebelage (13);
Ergreifen, Transferieren und Platzieren der zweiten und jeder darauf folgenden Fasergewebelage (13) auf ähnliche Weise wie die erste Fasergewebelage auf die zuvor platzierte Fasergewebelage, bis die letzte Fasergewebelage des Rohlings platziert wurde;
Unterziehen zumindest einer der Glasfasergewebelagen (13), die auf der Form (3) platziert sind, einem Verdichtungsschritt, der Folgendes umfasst:
Bewegen der Stützstruktur (1) nach unten auf zumindest eine der Fasergewebelagen (13), die auf der Form (13) angesammelt sind, bis die Stützstruktur (1) den Formbereich (15.1) kontaktiert und der untere Teil der Stützstruktur (1) und der Formbereich (15.1) durch eine Dichtung (2) in hermetischem Kontakt sind, so dass der Hohlraum zwischen der Membran (6) und dem Formbereich (15.1) abgedichtet ist; Anlegen eines pneumatischen Drucks auf die flexible Membran (4), der ausgewählt ist aus negativem Druck, positivem Druck und Kombinationen davon, so dass sie verformt wird, bis sie die Gestalt der Form (3) annimmt, um Druck auf die in der Form platzierten Fasergewebelagen (13) auszuüben und somit den Rohling zu verdichten; und
Abschalten des pneumatischen Drucks und Entfernen der Vorrichtung.

## Revendications

1. Dispositif de manipulation et de compactage utilisant une membrane pour obtenir des préformes composées de feuilles de tissu en fibres utiles dans la fabrication automatique des composites, comprenant une structure de support (1) pouvant être couplée à un élément de translation mobile au moyen d'une structure de fixation (12); une membrane (4) assemblée dans la structure de support (1); et au moins un connecteur de vide (9) assemblé dans la structure de support (1);
dans lequel:
la structure de support (1) est un châssis avec une ouverture centrale (1.3, 1.4);
la membrane (4) est une membrane élastiquement flexible comprenant une bande périmétrale (4.2) immobilisée dans la structure de support (1) entourant une zone centrale recouvrant l'ouverture centrale (1.3, 1.4) de la structure de support (1), **caractérisé en ce que** la membrane (4) comprend une couche supérieure lisse (5) imperméable à l'air avec une surface inférieure sensiblement lisse et une couche inférieure (6) perméable à l'air;
des moyens d'espacement (7, 4.3) pour espacer la face inférieure de la couche supérieure (5) de la face supérieure de la couche inférieure (6) et permettre une distribution d'un vide appliqué entre lesdites couches (5, 6) par le connecteur de vide (9), sont positionnés entre la couche supérieure (5) et la couche inférieure (6);
la couche supérieure (5) et la couche inférieure (6) sont hermétiquement assemblées l'une à l'autre dans une zone d'assemblage dans la bande périmétrale (4.2) de la membrane (4), à distance de ladite ouverture centrale (1.3, 1.4);
le connecteur de vide (9) s'ouvre dans ladite zone de la bande périmétrale (4.2) au voisinage de ladite ouverture centrale (1.3, 1.4) entre ladite couche supérieure (5) et ladite couche inférieure (6) de sorte que lorsque la surface inférieure de la couche inférieure (5) est en contact avec une feuille de tissu en fibres (13) et qu'un vide est appliqué sur le connecteur de vide (9), l'air est aspiré par les moyens d'espacement (7, 4.3) et la couche inférieure (6), de sorte que la feuille de tissu en fibres (13) est retenue dans la couche inférieure (6) par l'action du vide;
la couche supérieure (5) et la couche inférieure (6) de la membrane (4) sont élastiquement flexibles de sorte qu'elles sont capables de s'adapter à la géométrie d'au moins un moule tridimensionnel (3) étant donné qu'elles sont capables de s'étirer avec l'application du vide et/ou de la pression.

2. Dispositif de manipulation et de compactage utilisant une membrane selon la revendication 1, **caractérisé en ce que** la couche inférieure (6) est prévue avec de nombreux trous de passage d'air (8).

3. Dispositif de manipulation et de compactage utilisant une membrane selon la revendication 1 ou 2, **caractérisé en ce que**:
la couche inférieure (6) comprend une surface inférieure sensiblement lisse et une surface supérieure faisant face à la surface inférieure de la couche supérieure (5);
les moyens d'espacement (7, 4.3) comprennent de nombreuses saillies d'espacement (7) sortant de la surface supérieure de la zone centrale de la couche inférieure (6) et/ou de la surface inférieure de la zone centrale de la couche supérieure (5);
les saillies d'espacement (7) forment un passage d'air par lequel l'air aspiré par la couche inférieure (6) vers le connecteur de vide (9) passe.

4. Dispositif de manipulation et de compactage utilisant une membrane selon la revendication 3, **caractérisé en ce que** les saillies (7) sont en contact, au moins lorsqu'un vide est appliqué sur le connecteur de vide (9), la surface inférieure dans la partie centrale de la couche supérieure (5) et les passages d'air sont formés entre les saillies d'espacement (7).

5. Dispositif de manipulation et de compactage utilisant une membrane selon la revendication 4, **caractérisé en ce que** la partie centrale de la couche supérieure (5) et la partie centrale de la couche inférieure (6) sont espacées l'une de l'autre par un interstice (4.1) de sorte que lorsqu'un vide est appliqué sur le connecteur de vide (9), la partie centrale de la couche inférieure (6) est attirée vers la couche supérieure (5) de sorte que les saillies (7) sont en contact avec la surface inférieure de la couche supérieure (5).

6. Dispositif de manipulation et de compactage utilisant une membrane selon l'une des revendications 3 à 6, **caractérisé en ce que** les saillies d'espacement (7) sortant de la couche inférieure (6) sont des bossages.

7. Dispositif de manipulation et de compactage utilisant une membrane selon l'une des revendications 3 à 7, **caractérisé en ce que** la couche inférieure comprend des trous de passage d'air (8) agencés entre les saillies d'espacement (7).

8. Dispositif de manipulation et de compactage utilisant une membrane selon l'une des revendications 3 à 7, **caractérisé en ce que** les moyens d'espacement (7) comprennent, dans au moins une zone de la bande périmétrale (4.2) au voisinage de l'ouverture centrale (1.3, 1.4) de la structure de support (1), une couche de distribution de vide intermédiaire séparant la couche supérieure (5) et la couche inférieure (6) et permettant la distribution de l'air aspiré par la couche inférieure vers le connecteur de vide (9) et **en ce que** le connecteur de vide (9) s'ouvre dans la couche de distribution de vide.

9. Dispositif de manipulation et de compactage utilisant une membrane selon la revendication 8, **caractérisé en ce que** la couche de distribution de vide est en outre intercalée entre les zones centrales respectives de la couche supérieure (5) et de la couche inférieure (6).

10. Dispositif de manipulation et de compactage utilisant une membrane selon la revendication 8 ou 9, **caractérisé en ce que** la couche de distribution de vide est intercalée dans la couche inférieure (6).

11. Dispositif de manipulation et de compactage utilisant une membrane selon l'une des revendications 8 à 10, **caractérisé en ce que** la couche de distribution de vide est réalisée avec un matériau de distribution de vide parmi les tissus d'aération en fil de polyester, les mailles de coton élastiques et similaires.

12. Dispositif de manipulation et de compactage utilisant une membrane selon l'une des revendications 1 à 11, **caractérisé en ce que**:
la structure de support (1) comprend une partie supérieure (1.1) et une partie inférieure (1.2) qui sont couplées entre elles par des moyens de fixation (10) et qui piègent la bande périmétrale (4.2) de la membrane élastique (4) entre elles;
le connecteur de support (9) traverse l'une desdites parties (1.1, 1.2) de la structure de vide (1) pour s'ouvrir entre la couche supérieure (5) et la couche inférieure (6) de la membrane (4).

13. Dispositif de manipulation et de compactage utilisant une membrane selon l'une des revendications précédentes, **caractérisé en ce que** la structure de support (1) peut être hermétiquement couplée à une zone de moulage (15.1) d'un établi de compactage (15) lorsqu'elle est appliquée sur le moule (3), de sorte que lorsqu'elle est appliquée sur le moule (3), un espace étanche à l'air délimité entre la membrane (4) et ladite zone de moulage (15.1) est formé dans l'ouverture centrale (1.3, 1.4) de la structure de support (1) et **en ce que** la membrane (4) est réalisée avec un matériau suffisamment extensible pour, lorsqu'elle est appliquée sur le moule (3) l'entourant, et qu'un vide est appliqué dans ledit espace étanche à l'air, se déplacer vers le moule (3) et comprimer des feuilles de tissu en fibres précédemment tendues (13) vers le moule (3) et compacter lesdites feuilles de tissu en fibres (13) afin de former une préforme.

14. Dispositif de manipulation et de compactage utilisant une membrane selon l'une des revendications précédentes, **caractérisé en ce qu'**il comprend un caisson de pression excessive (16) hermétiquement assemblé, couplé à la structure de support de sorte qu'il couvre la partie supérieure de l'ouverture centrale (1.3, 1.4) de la structure de support (1) et **en ce que** la membrane (4) est réalisée avec un matériau suffisamment extensible pour, lorsqu'elle est appliquée sur le moule (3) l'entourant et que l'intérieur du caisson (16) est sous pression, se déplacer vers le moule (3) et comprimer des feuilles de tissu en fibres précédemment tendues (13) vers le moule (3) et compacter lesdites feuilles de tissu en fibres (13) pour former une préforme.

15. Procédé pour manipuler et compacter des feuilles de tissu en fibres composites pour former des préformes prévues pour la fabrication des composites, qui comprend les étapes consistant à saisir des feuilles de tissu en fibres (13) successives agencées de manière bidimensionnelle dans une première station de travail (14); transférer successivement les feuilles de tissu en fibres (13) vers une seconde station de travail (15) et placer les feuilles de tissu en fibres (13) sur un moule tridimensionnel (3), les empiler les une sur les autres pour obtenir une préforme, et compacter les feuilles de tissu en fibres (13) en place en au moins une étape; **caractérisé en ce que** le dispositif de manipulation et de compactage utilisant une membrane selon l'une quelconque des revendications 1 à 14 est utilisé, et **en ce qu'**il comprend les étapes consistant à:
saisir une première feuille de tissu en fibres (13) de la première station de travail (14) en positionnant le dispositif sur la première feuille de tissu en fibres (13) et appliquer un vide entre la couche supérieure (5) et la couche inférieure (6) de la membrane élastique (4) de sorte que la première feuille de tissu en fibres (13) est collée, par aspiration d'air, sur la partie centrale de la surface inférieure de la couche inférieure (6) de la membrane élastique (4);
transférer le dispositif avec la première feuille de tissu en fibres (13) vers la seconde station de travail (15) et faire descendre le dispositif vers une zone de moulage (15.1) dans laquelle le moule (3) est positionné;
placer la première feuille de tissu en fibres (13) sur le moule (3), couper le vide, fixer la première feuille de tissu en fibres (13) si nécessaire, faire monter le dispositif en laissant la première feuille de tissus en fibres (13) placée sur le moule (3) et déplacer le dispositif vers la première station de travail (14) pour saisir une deuxième feuille de tissu en fibres (13);
saisir, transférer et placer la deuxième feuille et chaque feuille de tissus en fibres (13) successives de manière similaire à la première feuille de tissu en fibres sur la feuille de tissu en fibres précédemment placée jusqu'à avoir placé la dernière feuille de tissu en fibres de la préforme;
soumettre au moins l'une des feuilles de tissu en fibres de verre (13) placées sur le moule (3) à une étape de compactage qui comprend les étapes consistant à:
faire descendre la structure de support (1) sur au moins l'une des feuilles de tissu en fibres (13) accumulées sur le moule (13) jusqu'à ce que la structure de support (1) entre en contact avec la zone de moulage (15.1) et que la partie inférieure de la structure de support (1) et la zone de moulage (15.1) soient en contact hermétique par le biais d'un joint (2) de sorte que la cavité entre la membrane (6) et la zone de moulage (15.1) est étanche;
appliquer la pression pneumatique sur la membrane flexible (4) choisie parmi la pression négative, la pression positive et leurs combinaisons, de sorte qu'elle se déforme jusqu'à ce qu'elle adopte la forme du moule (3) pour exercer la pression sur les feuilles de tissu en fibres (13) placées dans le moule et compactant ainsi la préforme; et
couper la pression pneumatique et retirer le dispositif.
